(19) **Europäisches Patentamt**
**European Patent Office**
**Office européen des brevets**

(11) **EP 1 685 373 B1**

(12) **EUROPÄISCHE PATENTSCHRIFT**

(45) Veröffentlichungstag und Bekanntmachung des Hinweises auf die Patenterteilung:
**27.01.2010  Patentblatt 2010/04**

(21) Anmeldenummer: **04818415.4**

(22) Anmeldetag: **08.11.2004**

(51) Int Cl.:
*G01L 11/00* (2006.01)    *G01N 27/419* (2006.01)
*G01N 27/407* (2006.01)

(86) Internationale Anmeldenummer:
**PCT/EP2004/052865**

(87) Internationale Veröffentlichungsnummer:
**WO 2005/047841 (26.05.2005 Gazette 2005/21)**

(54) **VORRICHTUNG ZUR MESSUNG DES DRUCKS IN EINEM GASGEMISCH**

DEVICE FOR MEASURING THE PRESSURE IN A MIXTURE OF GASES

DISPOSITIF POUR MESURER LA PRESSION D'UN MELANGE GAZEUX

(84) Benannte Vertragsstaaten:
**DE ES FR IT**

(30) Priorität: **12.11.2003  DE 10352797**

(43) Veröffentlichungstag der Anmeldung:
**02.08.2006  Patentblatt 2006/31**

(73) Patentinhaber: **ROBERT BOSCH GMBH**
**70442 Stuttgart (DE)**

(72) Erfinder:
• **STROHMAIER, Rainer**
**70565 Stuttgart (DE)**
• **BAUER, Martin**
**76227 Karlsruhe (DE)**
• **KAMP, Bernhard**
**71640 Ludwigsburg (DE)**

(56) Entgegenhaltungen:
**EP-A- 1 139 096      DE-A1- 3 122 861**
**DE-A1- 19 621 433      US-B1- 6 495 027**

EP 1 685 373 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Stand der Technik

Die Erfindung geht aus von einer Vorrichtung zur Messung des Drucks in einem Gasgemisch nach dem Oberbegriff des Anspruchs 1.

Eine bekannte Vorrichtung zur Messung des Absolutdrucks von Luft (DE 31 22 861 A1) weist einen nach den Diffusionsgrenzstromprinzip arbeitenden, ampemmetrischen Sensor, dort polarographische Messzelle genannt, auf, der aus einem Sauerstoffionen leitenden Festelektrolytkörper und zwei auf voneinander abgekehrten Seiten des Festelektrolytkörpers angeordneten Elektroden besteht, von denen die als Katode betriebene Elektrode über eine sie bedeckende poröse Diffusionsschicht der zu messenden Luft ausgesetzt ist. An die Elektroden ist eine konstante Gleichspannung gelegt. Als Folge der elektrochemischen Reduktion des Sauerstoffs wird dieser an der Katode verbraucht. Der so entstehende Konzentrationsgradient des Sauerstoffs ruft einen Diffusionsstrom von Sauerstoff durch die Diffusionsschicht hervor. Dieser ist bestimmend für die reduzierte Sauerstoffmenge und damit für das Messsignal. Die Poren der Diffusionsschicht weisen vorzugsweise einen Durchmesser auf, der klein ist gegenüber der mittleren freien Weglänge der Sauerstoffmoleküle. Unter diesen Bedingungen erfolgt der Transport der Sauerstoffionen vor allem durch die sog. Knudsen-Diffusion, wodurch eine starke Druckabhängigkeit des Diffusionsstroms und damit des Messsignals zustande kommt. Die Vorrichtung ist noch mit einer geregelten Heizung ausgestattet, die den Sensor bzw. die Messzelle auf eine konstante Temperatur oberhalb ca. 600°C erwärmt.

Eine Einrichtung gemäß dem Oberbegriff des Anspruchs 1 ist aus EP-A-1 139 096 bekannt.

Vorteile der Erfindung

Die erfindungsgemäße Vorrichtung zur Gasdruckmessung mit den Merkmalen des Anspruchs 1 hat den Vorteil, dass sie den Druck in einem Gasgemisch, bei dem die Konzentration oder der Molenbruch von Gaskomponenten nicht - wie der Molenbruch des Sauerstoffs in Luft - konstant ist, sondern zeitabhängig schwankt, sehr genau misst, und zwar dadurch, dass der Molenbruch einer Gaskomponente, die zur Druckmessung herangezogen wird, vor der Diffusionsbarriere zumindest während der Messphase auf 100% konstant gehalten wird, also an der Diffusionsbarriere die reine, zur Druckmessung herangezogene Gaskomponente ansteht. Der Messwert des amperometrischen Sensors wird durch den Massenstrom J der Gaskomponente, die durch die Diffusionsbarriere hindurchdiffundiert, bestimmt. Da im Falle der Knudsen-Diffusion der Massenstrom J gleich dem Produkt aus dem Diffusionskoeffizienten D der Diffusionsbarriere und dem Partialdruck der zur Messung herangezogenen Gaskomponente P(GK) und dieser wiederum gleich dem Produkt aus Gesamtdruck P des Gasgemisches, dem Molenbruch der Gaskomponente x(GK) und dem Diffusionskoeffizienten D der Diffusionsbarriere ist, also

$$J \approx D \cdot P(GK) = D \cdot x(GK) \cdot P$$

gilt, ist dadurch, dass der Molenbruch x(GK) vor der Diffusionsbarriere erfindungsgemäß auf 100% konstant gehalten wird und der Diffusionskoeffizient D bei geeigneter Auslegung der Diffusionsbarriere unabhängig vom Gesamtdruck P ist, der Gesamtdruck proportional dem Massenstrom und damit dem Messwert des amperometrischen Sensors. Die zur Druckmessung herangezogene Gaskomponente ist vorzugsweise eine im Gasgemisch enthaltene Gaskomponente, kann aber auch eine solche Gaskomponente sein, die sich erst am amperometrischen Sensor bildet, z.B. durch Abspaltung von Sauerstoffionen von im fetten Abgas enthaltenen Wasseranteilen. Die erfindungsgemäße Vorrichtung ist hochtemperaturtauglich und geeignet, zur Messung des Gasdrucks in heißen Abgasen von Verbrennungsmotoren eingesetzt zu werden.

Durch die in den weiteren Ansprüchen aufgeführten Maßnahmen sind vorteilhafte Weiterbildungen und Verbesserungen der im Anspruch 1 angegebenen Gasdruckmessvorrichtung möglich.

Gemäß einer bevorzugten Ausführungsform der Erfindung umfassen die Mittel zum Fixieren des 100% Molenbruchs der Gaskomponente ein im Festelektrolyten der Diffusionsbarriere vorgelagertes Speichervolumen für die Gaskomponente, das gegenüber dem Gasgemisch durch eine Diffusionsstrecke abgeschlossen ist, sowie zwei auf dem Festelektrolyten aufgebrachte Elektroden, die bei Anlegen einer entsprechenden, konstanten Spannung Moleküle der Gaskomponente durch den Festelektrolyten hindurch in das Speichervolumen hineinpumpen, so dass das Speichervolumen ausschließlich mit der reinen Gaskomponente gefüllt ist. Wird als Gaskomponente zur Druckmessung Sauerstoff herangezogen und die dem Gasgemisch, z.B. dem Abgas einer Brennkraftmaschine, ausgesetzte äußere Elektrode als Anode betrieben, so findet an der Dreiphasengrenze von Festelektrolyt, Elektrode und Gasgemisch eine Reduktion des Sauerstoffs zu Sauerstoffionen statt, die durch den Festelektrolyten hindurchgleitet und an der Anode wieder zu elementarem Sauerstoff oxidiert werden.

Gemäß einer vorteilhaften Ausführungsform der Erfindung weist die Diffusionsbarriere eine für eine sog. Knudsen-Diffusion erforderliche Porosität auf. Eine solche Knudsen-Diffusion wird dann erreicht, wenn der Durchmesser der Poren der Diffusionsbarriere klein ist gegenüber der mittleren freien Weglänge der Gaskomponentenmoleküle, z.B. der Sauerstoffmoleküle. Wie bereits vorstehend erwähnt, ist dann der Diffusionskoeffizient der Diffusionsbarriere unabhängig vom Gasamtdruck des Messgases.

Gemäß einer vorteilhaften Ausführungsform der Erfindung ist die Diffusionsstrecke so ausgelegt, dass sie einen geringen Druckgradienten, d.h. einen sehr niedrigen Druckabfall über den Diffusionsweg, aufweist. Die Diffusionsstrecke ist damit durchlässig genug, um einen Druckausgleich zwischen dem Speichervolumen und dem Gasgemisch zu ermöglichen und verhindert trotzdem, dass das Gasgemisch in das Speichervolumen gelangt.

Das Speichervolumen und die Diffusionsstrecke lassen sich gemäß weiteren Ausführungsformen der Erfindung auf unterschiedliche Weise realisieren. Bevorzugt wird das Speichervolumen durch eine im Festelektrolyten ausgebildete Kammer geschaffen, die unmittelbar an die Diffusionsbarriere angrenzt. Die Diffusionsstrecke wird durch eine zweite poröse Diffusionsbarriere aus keramischem Material, z.B. Aluminiumoxid ($Al_2O_3$), gebildet, die die Kammer zum Abgas hin begrenzt. Die zweite Diffusionsbarriere kann dabei in Teilbarrieren unterteilt werden, zwischen denen jeweils ein Hohlraum vorhanden ist. Die Diffusionsstrecke kann auch von mindestens einem langgestreckten Kanal gebildet werden. Ebenso ist es möglich, Diffusionsstrecke und Speichervolumen als Einheit aus einer porösen Keramik auszuführen.

Gemäß einer vorteilhaften Ausführungsform der Erfindung sind die Elektroden zum Pumpen der Gaskomponente Zusatzelektroden, von denen die eine als Katode betriebene Zusatzelektrode innerhalb des Speichervolumens, z.B. in der Kammer, angeordnet und die andere als Anode betriebene Zusatzelektrode dem Gasgemisch ausgesetzt ist, und ist an die Zusatzelektroden eine Gleichspannung gelegt. Dies hat den Vorteil, dass die Druckmessung kontinuierlich, also unterbrechungslos durchgeführt werden kann. Dabei kann vorteilhaft eine Elektrode eingespart werden, indem die als Anode betriebene Zusatzelektrode mit der nicht von der Diffusionsbarriere abgeschirmten Elektrode des amperometrischen Sensors zusammengelegt wird.

Gemäß einer alternativen Ausführungsform der Erfindung werden als Elektroden für das Pumpen der Gaskomponente die Elektroden des amperometrischen Sensors herangezogen und hierzu vor der eigentlichen Druckmessphase die Elektrodenspannung für ein Kurzzeitintervall so umgepolt, dass die der Diffusionsbarriere zugekehrte Elektrode als Anode arbeitet. Dies hat den Vorteil, dass auf zusätzliche Elektroden mit entsprechenden Zuleitungen verzichtet werden kann. Ein gewisser Nachteil besteht darin, dass die Druckmessung nur diskontinuierlich in den Phasen durchgeführt werden kann, in welchen die der Diffusionsbarriere zugekehrte Elektrode des amperometrischen Sensors als Katode betrieben wird.

Gemäß einer vorteilhaften Ausführungsform der Erfindung wird als Gasgemisch das Abgas einer Brennkraftmaschine in Kraftfahrzeugen und als die zur Druckmessung herangezogene Gaskomponente Sauerstoff verwendet. Bei dieser Anwendung der Vorrichtung zur Abgasdruckmessung ergeben sich eine Reihe von vorteilhafter Einsatzmöglichkeiten im Fahrzeug. So kann die Messgenauigkeit der eingesetzten Lambdasonden, die druckabhängig ist, durch Kompensation der Druckabhängigkeit verbessert werden. Des weiteren kann durch die Abgasdruckmessung die Steuerung der Abgasrückführung verbessert, bei der Ladedruckregelung der Abgasgegendruck begrenzt, die Dieselpartikelfilter-Überwachung verbessert und die Beladungserkennung der Dieselpartikelfilter durch Messung des Absolutdrucks verbessert werden, da die Kenntnis des Absolutdrucks des Abgases eine genauere Bestimmung des Strömungswiderstandes des Dieselpartikelfilter ermöglicht.

Die erfindungsgemäße Vorrichtung zur Gasdruckmessung ist besonders vorteilhaft anwendbar in einem Messfühler zur Bestimmung des Sauerstoffgehalts im Abgas von Brennkraftmaschinen, sog. Lambdasonden, insbesondere Breitband-Lambdasonden. Hier besteht das Problem, dass das Sondensignal abhängig vom Abgasdruck ist und der dadurch hervorgerufene Messfehler kompensiert werden muss. Die erfindungsgemäße Vorrichtung lässt sich besonders vorteilhaft in solche Messfühler integrieren, da ein Grossteil der Baukomponenten des Messfühler für die Funktionalität der Vorrichtung zur Gasdruckmessung eingesetzt werden kann und damit nur ein geringer Zusatzaufwand für die Gasdruckmessung erforderlich ist. Dabei ist sowohl ein kontinuierlicher Betrieb der Druckmessvorrichtung möglich, so dass bei laufender Lambda-Messung auch der Gasdruck laufend gemessen und die Lambda-Messung laufend korrigiert wird, als auch ein diskontinuierlicher Betrieb möglich, bei der die Gasdruckmessung nur intervallmäßig, also bei vorübergehend ausgesetzter Lambda-Messung, durchgeführt werden kann. Während im letzten Fall außer der Ausbildung des Sauerstoff-Speichervolumens und der Diffusionsstrecke im Festelektrolyten keinerlei zusätzliche Baukomponenten und Zuleitung für die Druckmessung erforderlich sind, werden im ersten Fall noch zusätzlich eine Elektrode und eine Zuleitung zu dieser Elektrode benötigt.

Gemäß alternativen Ausführungsformen des diskontinuierlichen Betriebs wird entweder die Referenzelektrode und die äußere Pumpelektrode oder die innere und äußere Pumpelektrode zum Sauerstoffpumpen in das im ersten Fall im Referenzkanal und im zweiten Fall am Messraum ausgebildete, durch Diffusionsbarriere und Diffusionsstrecke eingeschlossene Speichervolumen herangezogen, wozu eine entsprechende Spannung an die genannten Elektroden angelegt wird. Danach wird die Spannung umgepolt und der zwischen den Elektroden der Pumpzelle fließende Grenzstrom gemessen. In dem Zeitintervall der Druckmessung wird die Lambda-Messung des Messfühlers ausgesetzt.

Messfühler, vorzugsweise Breitband-Lambdasonden, mit einer integrierten Vorrichtung zur Gasdruckmessung sind in den Ansprüche 15 - 20 angegeben. Solche Messfühler haben den Vorteil, dass neben der genauen Messung des Lambdawertes noch die durch die integrierte Druckmessvorrichtung wie vorstehend erläuterten Vorteile bezüglich Ladedruckregelung und Dieselpartikelfilter-Überwachung genutzt werden können, ohne dass separate Drucksensoren eingebaut werden müssen.

Zeichnung

Die Erfindung ist anhand von in der Zeichnung dargestellten Ausführungsbeispielen im folgenden näher beschrieben. Es zeigen in schematischer Darstellung:

Fig. 1          einen Querschnitt einer Vorrichtung zur Gasdruckmessung mit kontinuierlicher Druckmessung,

Fig. 2 bis 4    jeweils eine gleiche Darstellung wie in Fig. 1 einer modifizierten Vorrichtung zur Gasdruckmessung gemäß dreier Ausführungsbeispiele,

Fig. 5          einen Querschnitt einer Vorrichtung zur Gasdruckmessung mit diskontinuierlicher Druckmessung,

Fig. 6          einen Längsschnitt einer Breitband- Lambdasonde mit integrierter Druckmessvorrichtung für kontinuierliche Druckmessung,

Fig. 7          einen Längsschnitt einer Breitband-Lambdasonde mit integrierter Druckmessvorrichtung für diskontinuierliche Druckmessung,

Fig. 8          einen Längsschnitt einer Breitband-Lambdasonde mit integrierter Druckmessvorrichtung gemäß einem alternativen Ausführungsbeispiel für diskontinuierliche Druckmessung.

Beschreibung der Ausführungsbeispiele

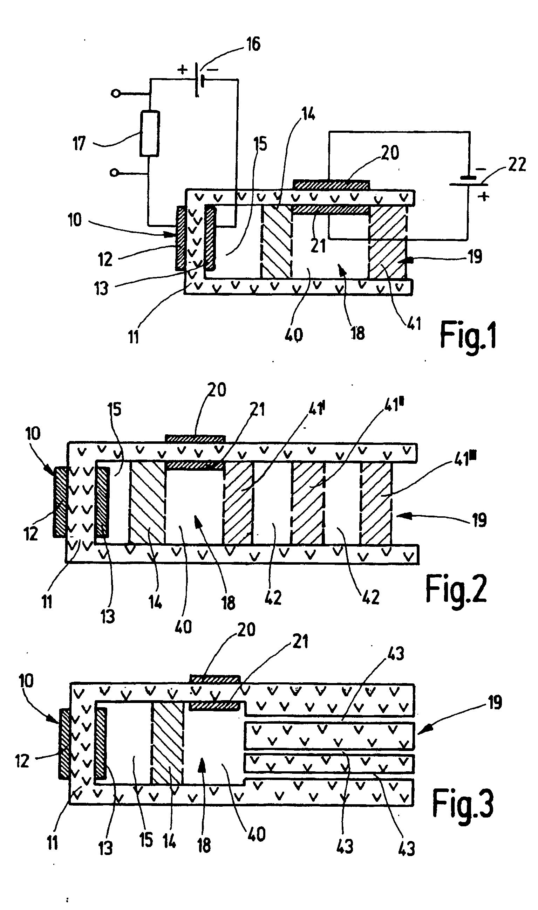

Die in Fig. 1 schematisiert dargestellte Vorrichtung zur Messung des Drucks in einem Gasgemisch weist einen nach dem Grenzstromprinzip arbeitenden amperometrischen Sensor 10 auf. Dieser Sensor 10 misst die Konzentration einer Gaskomponente, z.B. die Sauerstoffkonzentration im Abgas einer Brennkraftmaschine. Der amperometrische Sensor 10 weist einen Festelektrolyten 11 und zwei auf dem Festelektrolyten 11 aufgebrachte Elektroden 12, 13 sowie eine poröse Diffusionsbarriere 14 auf, bei der die Durchmesser der Poren klein gegenüber der mittleren freien Weglänge der Gaskomponente, deren Konzentration gemessen wird, sind. Durch diese Porosität findet in der Diffusionsbarriere 14 eine sog. Knudsen-Diffusion statt, wodurch der Diffusionskoeffizient der Diffusionsbarriere 14 unabhängig von dem Gesamtdruck des Gasgemisches wird. Von den beiden Elektroden 12, 13 ist eine erste außen auf dem Festelektrolyt 11 angeordnet und damit dem Gasgemisch ausgesetzt, während die zweite in einem im Festelektrolyten 11 ausgebildeten Hohlraum 15 angeordnet ist, der von der Diffusionsbarnere 14 abgeschlossen ist. Dabei kann die Diffusionsbarriere 14 auch unmittelbar auf der Elektrode 13 aufgebracht sein, so dass der Hohlraum 15 entfällt. An die beiden Elektroden 12, 13 ist eine konstante Gleichspannung angelegt, und zwar derart, dass die außenliegende erste Elektrode 12 als Anode und die im Hohlraum 15 angeordnete zweite Elektrode 13 als Katode betrieben wird. Im Stromkreis der an die Spannungsquelle 16 angeschlossenen beiden Elektroden 12, 13 ist ein Messwiderstand 17 eingeschaltet, an dem eine dem im Stromkreis fließenden Grenzstrom proportionale Spannung abnehmbar ist. Zur Vereinfachung der Beschreibung wird im folgenden die Wirkungsweise des amperometrischen Sensors 10 zur Messung der Sauerstoffkonzentration im Abgas einer Brennkraftmaschine beschrieben, wobei die Konzentration einer beliebigen Gaskomponenten, z.B. auch Wasserstoff, in einem beliebigen Gasgemisch erfasst werden kann.

Bei Anlegen einer Gleichspannung an die Elektroden 12, 13 wird das am Messwiderstand 17 abnehmbare Messsignal des amperometrischen Sensors 10 durch den Massenstrom J des Sauerstoffs bestimmt, der durch die Diffusionsbarriere 14 hindurchtritt. Dieser Massenstrom berechnet sich zu

$$J \approx D \cdot P(O_2) = D \cdot x(O_2) \cdot P,$$

wobei D der Diffusionskoeffizient der Diffusionsbarriere 14, $P(O_2)$ der Sauerstoffpartialdruck, P der Gesamtdruck des Abgases und $x(O_2)$ der Molenbruch des Sauerstoffs ist. Da in der Diffusionsbarriere 14 aufgrund der gewählten Porengröße Knudsen-Diffusion stattfindet, ist der Diffusionskoeffizient D vom Gesamtdruck P unabhängig und das Messsignal proportional dem Sauerstoffpartialdruck $P(O_2)$. In dem beschriebenen Sensor wird nunmehr der Molenbruch des Sauerstoffs $x(O_2)$ vor der Diffusionsbarriere 14 bei 100% fixiert , so dass vor der Diffusionsbarriere 14 reiner Sauerstoff ansteht. Damit ist der Massenstrom J direkt proportional dem Gesamtdruck P des Abgases und der über den Messwiderstand 17 fließende Grenzstrom ein Maß für den Gesamtdruck P des Abgases. Die Fixierung des Molenbruchs des Sauerstoffs $x(O_2)$ auf 100% wird dadurch erreicht, dass im Festelektrolyten 11 ein sich unmittelbar an die Diffusionsbarriere 14 anschließendes Speichervolumen 18 für Sauerstoff vorgesehen wird, das über eine Diffusionsstrecke 19 mit dem Abgas in Verbindung steht, und zusätzliche Maßnahmen getroffen sind, um Sauerstoff durch den Festelektrolyten 11 hindurch in das Speichervolumen 18 hineinzupumpen, so dass im Speichervolumen 18 der Molenbruch des Sauerstoffs $x(O_2)$ zumindest während der Druckmessphase der Vorrichtung auf 100% gehalten wird, also das Speichervolumen 18 mit reinem Sauerstoff gefüllt ist. Die Diffusionsstrecke 19 ist so ausgelegt, dass sie einen geringen Druckgradienten aufweist und damit ein Druckausgleich zwischen dem Speichervolumen 18 und dem Abgas möglich ist, und dass sie eine Diffusion des Abgases in dem Speicher 18 verhindert.

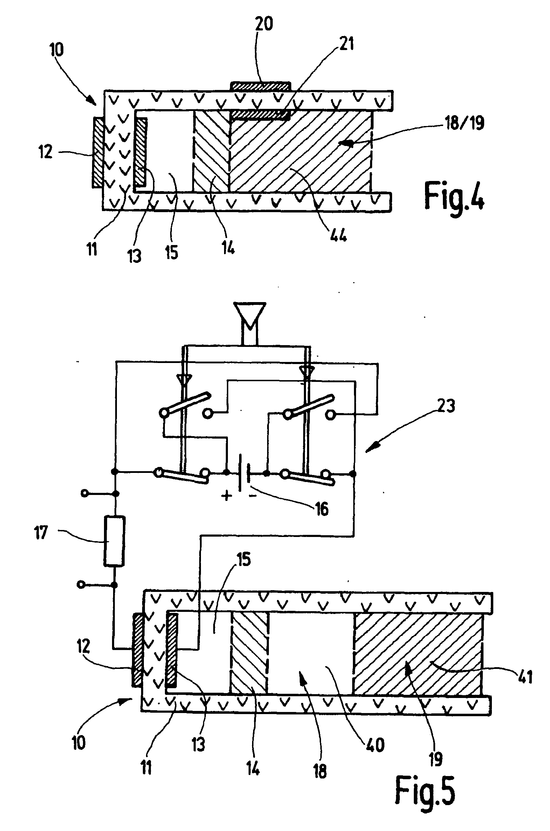

Im Ausführungsbeispiel der Fig. 1 ist das Speichervolumen 18 von einer zwischen der Diffusionsbarriere 14 und der Diffusionsstrecke 19 im Festelektrolyten ausgebildeten Kammer 40 zur Verfügung gestellt, und die Diffusionsstrecke 19 ist von einer porösen Diffusionsbarriere 41 aus keramischem Material, z.B. Aluminiumoxid ($Al_2O_3$), gebildet. Anstelle der einen Diffusionsbarriere 41 können mehrere Diffusionsbarrieren 41', 41" hintereinander angeordnet werden, wobei zwischen den einzelnen Diffusionsbarrieren jeweils ein Hohlraum 42 vorhanden ist (Fig. 2). Die Diffusionsstrecke 19 kann auch durch einen oder mehrere langgestreckten Kanäle 43 realisiert werden, die durch einsprechende Auslegung ihres Querschnitts und ihrer Länge den Erfordernissen der Diffusionsstrecke 19 genügen (Fig. 3). Speichervolumen 18 und Diffusionsstrecke 19 können als Einheit ausgebildet sein, z.B. als ein Füllstück 44 aus keramischem Material, z. B. Aluminiumoxid ($Al_2O_3$), das sich unmittelbar an die Diffusionsbarriere 14 anschließt (Fig. 4).

Zum Pumpen des Sauerstoffs in das Speichervolumen 18 bzw. in die Kammer 40 sind im Ausführungsbeispiel der Fig. 1 auf dem Festelektrolyten 11 zwei Zusatzelektroden 20, 21 so aufgebracht, dass die eine Zusatzelektrode 20 dem Abgas ausgesetzt ist und die andere Zusatzelektrode 21 in der Kammer 40 angeordnet ist. Mittels einer Spannungsquelle 22 wird an die beiden Zusatzelektroden 20, 21 eine konstante Gleichspannung derart angelegt, dass die in der Kammer 40 angeordnete Zusatzelektrode 21 als Anode und die dem Abgas ausgesetzte Zusatzelektrode 20 als Katode fungiert. An der Dreiphasengrenze von Festelektrolyt 11, Zusatzelektrode 20 und Abgas findet eine Reduktion von Sauerstoff zu Sauerstoffionen statt, die durch den Festelektrolyten 11 hindurchgeleitet und an der Zusatzelektrode 21 wieder zu elementarem Sauerstoff oxidiert werden. Auf diese Weise wird ständig Sauerstoff in die Kammer 40 hineingepumpt. Die die Diffusionsstrecke 19 bildende zweite Diffusionsbarriere 41 ist so ausgelegt, dass sie einen geringen Druckgradienten aufweist, d.h. einen geringen Druckabfall oder Druckverlust über den Diffusionsweg. Durch diese Auslegung der zweiten Diffusionsbarriere 41 ist diese durchlässig genug, um einerseits einen Druckausgleich zwischen der Kammer 40 und dem Abgas herzustellen und andererseits eine Diffusion des Abgases in die Kammer 40 zu verhindern. Der Sauerstoff diffundiert durch die erste Diffusionsbarriere 14 hindurch und gelangt an die Elektrode 13 des amperometrischen Sensors 10. An der Dreiphasengrenze Festelektrolyt 11, Elektrode 13 und Sauerstoff wird der Sauerstoff wiederum zu Sauerstoffionen reduziert, die durch den Festelektrolyten 11 hindurchwandern und an der ersten Elektrode 12 des amperometrischen Sensors 10 wieder zu Sauerstoff oxidiert werden. Die erste Diffusionsbarriere 14 sorgt dafür, dass jedes ankommende Sauerstoffmolekül unmittelbar in Sauerstoffionen umgewandelt wird, so dass im Hohlraum 15 stets eine Sauerstoffkonzentration nahe Null herrscht. Der Sauerstoffionentransport durch den Festelektrolyten 11, der sog. Massenstrom J, ergibt einen durch den Messwiderstand 17 fließenden Grenzstrom, der nach dem vorstehend Ausgeführten ein Maß für den Gesamtdruck des Abgases ist.

In dem Ausführungsbeispiel der Fig. 2 - 4 ist die Anordnung der Elektroden 12, 13 und Zusatzelektroden 20, 21 in gleicher Weise wie in Fig. 1 vorgenommen. Die Zusatzelektrode 21 ist dabei immer im Speichervolumen 18 angeordnet, das in den Ausführungsbeispielen der Fig. 2 und 3 wie in Fig. 1 eine von der Diffusionsbarriere 14 und der Diffusionsstrecke 19 begrenzte Kammer 40 ist. Im Ausführungsbeispiel der Fig. 4 ist die "Kammer" mit dem porösen Keramikmaterial der als Diffusionsbarriere 41 ausgebildeten Diffusionsstrecke 19 ausgefüllt. Das Keramikmaterial, z.B. Aluminiumoxid ($Al_2O_3$), deckt die Zusatzelektrode 21 ab und reicht bis an die Diffusionsbarriere 41.

Das in Fig. 5 dargestellte Ausführungsbeispiel der Vorrichtung zur Gasdruckmessung ist insoweit modifiziert, als die Zusatzelektroden mit Spannungsquelle entfallen sind und zum Sauerstoffpumpen in das wiederum von einer Kammer 40 zur Verfügung gestellte Speichervolumen 18 hinein die Elektroden 12, 13 des amperometrischen Sensors 10 verwendet werden, der hierzu intervallmäßig von einer Messphase, in dem der Gasdruck gemessen wird, auf eine Pumpphase, in der die Kammer 40 mit reinem Sauerstoff gefüllt wird, umgeschaltet werden muss. Hierzu ist eine schematisch dargestellte Schalteinrichtung 23 vorgesehen, durch deren Umschaltung die beiden Elektroden 12, 13 des amperometrsichen Sensors 10 wechselweise als Anode oder als Katode betrieben werden können. Zum Sauerstoffpumpen wird die Schalteinrichtung 23 so geschaltet, dass die zweite Elektrode 13 als Anode und die erste Elektrode 12 als Katode betrieben wird, so dass - wie vorstehend beschrieben - reiner Sauerstoff in den Hohlraum 15 und durch die Diffusionsbarriere 14 hindurch in die Kammer 40 gepumpt wird. Zur Druckmessung wird nunmehr die Schalteinrichtung 23 in der in Fig. 5 dargestellten Schaltstellung zurückgeschaltet, so dass nunmehr die erste Elektrode 12 als Anode und die zweite Elektrode 13 als Katode betrieben ist. Wie bereits zu Fig. 1 ausgeführt ist, wandern dadurch Sauerstoffionen von der Elektrode 13 durch den Festelektrolyten 11 hindurch zu der ersten Elektrode 12, und der sich dadurch in dem Stromkreis der Elektroden 12, 13 einstellende Grenzstrom ist ein Maß für den Gesamtdruck des Abgases. Der Vorteil dieser Vorrichtung besteht darin, dass die Zusatzelektroden 20, 21 nebst Zuleitungen eingespart werden können. Allerdings ist nur ein diskontinuierlicher Betrieb möglich, in dem wechselweise Sauerstoff gepumpt und der Abgasdruck gemessen wird Selbstverständlich kann die Ausbildung von Speichervolumen 18 und Diffusionsstrecke 19 im Ausführungsbeispiel der Fig. 5 wie in Fig. 2, 3 oder 4 dargestellt vorgenommen werden.

Die vorstehend in verschiedenen Ausführungsbeispielen beschriebene Vorrichtung zur Gasdruckmessung in Gasgemischen eignet sich besonders für den Einsatz bei Brennkraftmaschinen von Kraftfahrzeugen, da sie sich besonders einfach in die hier eingesetzten Lambdasonden zur Abgasmessung integrieren lässt und folgende Vorteile bietet:

Das Lambda-Signal, das ein Maß für die Konzentration des Sauerstoffs im Abgas ist, ist vom Gasdruck abhängig und ist somit fehlerbehaftet. Mittels der Gasdruckmessvorrichtung kann der Abgasdruck gemessen und der Fehler kompensiert werden. Bei Brennkraftmaschinen mit Abgasrückführung kann durch Kenntnis des Abgasdrucks die Steuerung der Abgasrückführung verbessert werden. Ebenso kann bei Ladedruckregelung der Abgasgegendruck begrenzt werden. Bei Dieselmotoren mit Dieselpartikelfilter kann die Dieselpartikelfilter-Überwachung durch die Abgasdruckmessung überwacht werden. Dabei lässt sich die Beladungserkennung durch Ergänzung des mit herkömmlichen Drucksensoren gemessenen Differenzdrucksignals mit einem mittels der Gasdruckmessvorrichtung gemessenen Absolutdrucksignal wesentlich verbessern, da der Strömungswiderstand des Dieselpartikelfilters genauer bestimmt werden kann.

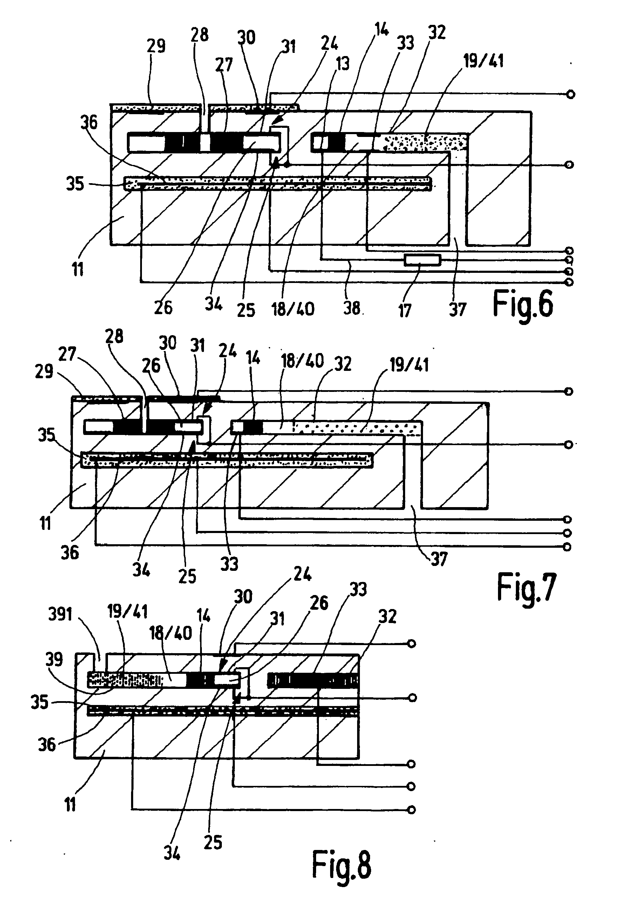

In den Fig. 6 - 8 sind drei Ausführungsbeispiele einer sog. Breitband-Lambdasonde mit integrierter Druckmessvorrichtung im Längsschnitt schematisch dargestellt. Da die Lambdasonde selbst einen amperometrischen Sensor 10 darstellt, kann dieser durch geringe Modifikationen zugleich zur Abgas-Druckmessung herangezogen werden.

Wie bekannt ist, weist der amperometrische Sensor 10 einen als Schichtverbund hergestellten Festelektrolyten 11 aus yttriumstabilisiertem Zirkoniumoxid ($ZrO_2$) auf, mit dem eine sog. Pumpzelle 24 und eine Konzentrations- oder Nernstzelle 25 aufgebaut ist. Zum Aufbau der Pumpzelle 24 ist im Festelektrolyten 11 ein Messraum 26 vorgesehen, der durch eine Diffusionsbarriere 27 gegenüber einem Abgaszutrittsloch 28 abgetrennt ist. Auf der Oberfläche des Festelektrolyten 11 ist eine von einer porösen Schutzschicht 29 abgedeckte, äußere Pumpelektrode 30 und im Innern des Messraum 26 auf dem Festelektrolyten 11 eine innere Pumpelektrode 31 der Pumpzelle 24 angeordnet. Zur Ausbildung der Nernstzelle 25 ist im Festelektrolyten 11 ein Referenzgaskanal 32 vorgesehen, in dem eine Referenzelektrode der Nernstzelle 25 einer gepumpten Sauerstoffreferenz ausgesetzt. Eine Nernst- oder Messelektrode 34 der Nernstzelle 25 ist in dem Messraum 26 auf dem Festelektrolyten 11 angeordnet. Zusätzlich ist im Festelektrolyten 11 noch eine Heizeinrichtung mit einem in einer Isolierung 35, z.B. Aluminiumoxid ($Al_2O_3$), eingebetteten elektrischen Heizleiter 36 vorhanden. Die Funktionsweise der Breitband-Lambdasonde ist bekannt und beispielsweise in der DE 199941 051 A1 beschrieben.

In dem Ausführungsbeispiel der Fig. 6 ist die kontinuierlich messende Gasdruckmessvorrichtung gemäß Fig. 1 dadurch integriert, dass der Referenzgaskanal 32 mit einer vom Abgas beaufschlagten Öffnung 37 versehen ist und im Referenzgaskanal 32 zwischen dieser Öffnung 37 und der Referenzelektrode 33 die Diffusionsstrecke 19 und das dieser zur Referenzelektrode 33 hin vorgelagerte Speichervolumen 18 für Sauerstoff ausgebildet ist. Das Speichervolumen 18 wird wiederum von einer Kammer 40 zur Verfügung gestellt, und die Diffusionsstrecke 19 ist als poröse Diffusionsbarriere 41 mit kleinem Druckgradienten ausgebildet. Im Referenzgaskanal 32 ist auf der von der Diffusionsstrecke 19 abgekehrten Seite der Referenzelektrode 33 die Elektrode 13 auf dem Festelektrolyten 11 angeordnet, die mit der äußeren Pumpelektrode 30 zur Druckmessung verwendet wird, so dass im Vergleich zu Fig. 1 die äußere Pumpelektrode 30 der Pumpzelle 24 die Funktion der Elektrode 12 des amperometrischen Sensors 10 wahrnimmt. In der Zuleitung 38 zur Elektrode 13 ist der Messwiderstand 17 angeordnet. Die Elektrode 13 ist durch die Diffusionsbarriere 14 gegenüber der die Referenzelektrode 33 aufnehmenden Kammer 40 abgetrennt. Die Referenzelektrode 33 realisiert zusammen mit der äußeren Pumpelektrode 30 der Pumpzelle 24 das Sauerstoffpumpen in die Kammer 40, so dass in letzterer immer 100% Sauerstoff vorliegt.

In den Lambdasonden gemäß Fig. 7 und 8 ist jeweils die mit diskontinuierlicher Druckmessung arbeitende Gasdruckmessvorrichtung gemäß Fig. 5 integriert. In beiden Ausführungsbeispielen ist die eigentliche Lambdasonde zur Abgasmessung identisch mit der in Fig. 6 ausgeführt, so dass gleiche Bauteile mit gleichen Bezugszeichen versehen sind.

Im Ausführungsbeispiel der Fig. 7 ist, wie im Ausführungsbeispiel der Fig. 6, der Referenzgaskanal 32 mit einer Öffnung 37 versehen, die mit Abgas beaufschlagt ist. Zwischen der Öffnung 37 und der Referenzelektrode 33 ist im Referenzgaskanal 32 die Diffusionsstrecke 19 (Diffusionsbarriere 41) und das vorgelagerte Speichervolumen 18 (Kammer 40) ausgebildet. Das Speichervolumen 18 (Kammer 40) ist gegenüber der Referenzelektrode 33 durch die Diffusionsbarriere 14 mit Knudsen-Diffusion getrennt. Wie zu Fig. 5 beschrieben ist, erfolgt hier das Sauerstoffpumpen in die Kammer 40 hinein durch entsprechende Beschaltung der äußeren Pumpelektrode 30 der Pumpzelle 24 und der Referenzelektrode 33, so dass im Vergleich zu Fig. 5 die äußere Pumpelektrode 30 der Pumpzelle 24 und die Referenzelektrode 33 die Funktion der Elektroden 12, 13 des amperometrischen Sensors 10 wahrnehmen. Zum Messen des Abgasdrucks werden, wie zu Fig. 5 beschrieben, die Spannungspotentiale an äußerer Pumpelektrode 30 und Referenzelektrode 33 umgeschaltet.

In dem Ausführungsbeispiel der Lambdasonde mit integrierter Druckmessvorrichtung gemäß Fig. 8 wird intervallmäßig die Pumpzelle 24 zur Gasdruckmessung herangezogen. Hierzu ist im Festelektrolyten 11 ein Verbindungskanal 39 mit einer Kanalöffnung 391 zum Abgas hin zum Messraum 26 hergestellt, in dem die Diffusionsstrecke 19 und das dieser zum Messraum 26 hin vorgelagerte Speichervolumen 18 für Sauerstoff ausgebildet sind. Die Diffusionsstrecke 19 ist als poröse Diffusionsbarriere 41 aus keramischem Material ausgeführt, und das Speichervolumen 18 ist als Kammer 40 ausgebildet. In der ersten Diffusionsbarriere 14 findet Knudsen-Diffusion statt. Die zweite Diffusionsbarriere 41 weist wiederum einen möglichst geringen Druckgradienten auf, so dass ein Druckausgleich zwischen der Kammer 40 und dem Abgas stattfinden kann. Wie bei der Lambdasonde gemäß Fig. 7 findet auch hier die Gasdruckmessung in Kurzzeitintervallen statt, in denen die Lambdamessung ausgesetzt ist. Die Gasdruckmessung erfolgt wie zu Fig. 5 beschrieben, wobei die beiden Pumpelektroden 30, 31 der Pumpzelle 24 die Funktion der Elektroden 12 und 13 in Fig. 5 übernehmen und während der Gasdruckmessung eine Umschaltung der an den Elektroden 30, 31 liegenden Spannung von der Pumpphase in die Messphase vorgenommen wird.

**Patentansprüche**

1.  Vorrichtung zur Messung des Drucks in einem Gasgemisch mit einem nach dem Grenzstromprinzip arbeitenden amperometrischen Sensor (10), der zwei auf einen Festelektrolyten (11) aufgebrachte, mit einer Gleichspannung belegte Elektroden (12, 13) aufweist, von denen eine Elektrode (13) von einer Diffusionsbarriere (14) abgeschirmt ist, und mit einem Messelement (17) zur Messung des über die Elektroden (12, 13) fließenden Grenzstroms als Maß für den Gasdruck, **dadurch gekennzeichnet, dass** Mittel vorgesehen sind, die zumindest während der Messphase den Molenbruch einer zur Druckmessung herangezogenen Gaskomponente vor der Diffusionsbarriere (14) auf konstant 100% fixieren.

2.  Vorrichtung nach Anspruch 1, **dadurch gekennzeichnet, dass** die Mittel ein im Festelektrolyten (11) der Diffusionsbarriere (14) vorgelagertes Speichervolumen (18) für die Gaskomponente, eine das Speichervolumen (18) zum Gasgemisch hin abschließende Diffusionsstrecke (19) und zwei am Festelektrolyten (11) angeordnete Elektroden zum Pumpen der Gaskomponente durch den Festelektrolyten (11) hindurch in das Speichervolumen (18) aufweisen.

3.  Vorrichtung nach Anspruch 2, **dadurch gekennzeichnet, dass** die Diffusionsstrecke (19) so ausgebildet ist, dass sie einen kleinen Druckgradienten aufweist.

4.  Vorrichtung nach Anspruch 2 oder 3, **dadurch gekennzeichnet, dass** das Speichervolumen (18) von einer an die Diffusionsbarriere (14) sich anschließenden Kammer (40) und die Diffusionsstrecke (19) von einer die Kammer (40) verschließenden zweiten Diffusionsbarriere (41) aus keramischem Material, vorzugsweise Aluminiumoxid ($Al_2O_3$), gebildet ist.

5.  Vorrichtung nach Anspruch 2 oder 3, **dadurch gekennzeichnet, dass** das Speichervolumen (18) von einer an die Diffusionsbarriere (14) sich anschließenden Kammer (40) und die Diffusionsstrecke (19) von mindestens einem langgestreckten Kanal (43) gebildet ist.

6.  Vorrichtung nach Anspruch 2 oder 3, **dadurch gekennzeichnet, dass** das Speichervolumen (18) und die Diffusionsstrecke (19) von einem porösen Füllstück (44) aus keramischem Material, vorzugsweise Aluminiumoxid ($Al_2O_3$), gebildet sind, das an die Diffusionsbarriere (14) angrenzt.

7.  Vorrichtung nach einem der Ansprüche 1 - 6, **dadurch gekennzeichnet, dass** die Diffusionsbarriere (14) eine für Knudsen-Diffusion erforderliche Porösität aufweist.

8.  Vorrichtung nach einem der Ansprüche 2 - 7, **dadurch gekennzeichnet, dass** die Elektroden zum Pumpen der Gaskomponente Zusatzelektroden (20, 21) sind, von denen eine als Anode betriebene Zusatzelektrode (21) innerhalb des Speichervolumens (18) angeordnet und eine als Katode betriebene Zusatzelektrode (20) dem Gasgemisch ausgesetzt ist und dass an den Zusatzelektroden (20, 21) eine Gleichspannung angelegt ist.

9.  Vorrichtung nach einem der Ansprüche 2 - 7, **dadurch gekennzeichnet, dass** die Elektroden zum Pumpen der Gaskomponente von den Elektroden (12, 13) des amperometrischen Sensors (10) gebildet sind, deren Elektrodenspannung vor der Druckmessphase für ein Zeitintervall so umpolbar ist, dass die von der Diffusionsbarriere (14) abgeschirmte Elektrode (13) als Anode betrieben ist.

10. Vorrichtung nach einem der Ansprüche 1- 9, **dadurch gekennzeichnet, dass** das Gasgemisch das Abgas einer Brennkraftmaschine und die Gaskomponente Sauerstoff ist.

11. Vorrichtung nach Anspruch 10, **gekennzeichnet durch** die Verwendung in einem Messfühler zur Bestimmung der Sauerstoffkonzentration im Abgas einer Brennkraftmaschine, indem Elektroden des Messfühlers als Elektroden des amperometrischen Sensors (10) und zum Pumpen der Gaskomponente eingesetzt sind.

12. Vorrichtung nach Anspruch 9 und 11, **dadurch gekennzeichnet, dass** der Messfühler eine Nernstzelle (25), bestehend aus einem Festelektrolyten (11) und zwei auf diesem angeordneten Elektroden (34, 33), von denen eine Nernst- oder Messelektrode (34) in einem im Festelektrolyten (11) ausgebildeten Messraum (26) angeordnet und eine Referenzelektrode (33) in einem im Festelektrolyten (11) ausgebildeten Referenzgaskanal (32) einer gepumpten Sauerstoffreferenz ausgesetzt ist, sowie eine Pumpzelle (24), bestehend aus einem Festelektrolyten (11) und zwei auf diesem angeordneten Pumpelektroden (30, 31), aufweist, von denen eine äußere Pumpelektrode (30) dem Abgas ausgesetzt und eine innere Pumpelektrode (31) im Messraum (26) angeordnet ist, und dass in einem in dem Messraum (26) mündenden Verbindungskanal (39) zum Abgas die Diffusionsstrecke (19) mit zum Messraum (26) hin vorgelagertem Speichervolumen (18) ausgebildet ist, die Diffusionsbarriere (14) zwischen Messraum (26) und Speichervolumen (18) angeordnet ist und die Pumpelektroden (30, 31) intervallmäßig zum Sauerstoffpumpen und zur Gasdruckmessung genutzt werden.

13. Vorrichtung nach Anspruch 9 und 11, **dadurch gekennzeichnet, dass** der Messfühler eine Nernstzelle (25), bestehend aus einem Festelektrolyten (11) und zwei auf diesem angeordneten Elektroden (33, 34), von denen eine Nernst- oder Messelektrode (34) in einem im Festelektrolyten (11) ausgebildeten Messraum (26) angeordnet und eine Referenzelektrode (33) in einem im Festelektrolyten (11) ausgebildeten Referenzgaskanal (32) einer gepumpten Sauerstoffreferenz ausgesetzt ist, sowie eine Pumpzelle (24), bestehend aus einem Festelektrolyten (11) und zwei auf diesem angeordneten Pumpelektroden (30, 31), aufweist, von denen eine äußere Pumpelektrode (30) dem Abgas ausgesetzt und eine innere Pumpelektrode (31) im Messraum (26) angeordnet ist, und dass der Referenzgaskanal (32) mit einer dem Abgas ausgesetzten Öffnung (37) versehen ist, im Referenzgaskanal zwischen Referenzelektrode (33) und Öffnung (37) die Diffusionsstrecke (19) und das dieser vorgelagerte Speichervolumen (18) ausgebildet sind, zwischen Speichervolumen (18) und Referenzelektrode (33) die Diffusionsbarriere (14) angeordnet ist und zum Sauerstoffpumpen und zur Gasdruckmessung intervallweise die äußere Pumpelektrode (30) und die Referenzelektrode (33) durch Umschaltung ihrer Spannungspotentiale genutzt werden.

14. Vorrichtung nach Anspruch 8 und 11, **dadurch gekennzeichnet, dass** der Messfühler eine Nernstzelle (25), bestehend aus einem Festelektrolyten (11) und zwei auf diesem angeordneten Elektroden (34, 33), von denen eine Nernst- oder Messelektrode (34) in einem im Festelektrolyten (11) ausgebildeten Messraum (26) angeordnet und eine Referenzelektrode (33) in einem im Festelektrolyten (11) ausgebildeten Referenzgaskanal (32) einer gepumpten Sauerstoffreferenz ausgesetzt ist, sowie eine Pumpzelle (24), bestehend aus einem Festelektrolyten (11) und zwei auf diesem angeordneten Pumpelektroden (30, 31), aufweist, von denen eine äußere Pumpelektrode (30) dem Abgas ausgesetzt und eine innere Pumpelektrode (31) im Messraum (26) angeordnet ist, und dass der Referenzgaskanal (32) mit einer vom Abgas ausgesetzten Öffnung (37) versehen ist, im Referenzgaskanal (32) zwischen Referenzelektrode (33) und Öffnung (37) die Diffusionsstrecke (19) und das dieser vorgelagerte Speichervolumen (18) ausgebildet sind, im Referenzgaskanal (32) auf der von der Diffusionsstrecke (19) abgekehrten Seite der Referenzelektrode (33) die Diffusionsbarriere (14) und auf der von der Referenzelektrode (33) abgekehrten Seite der Diffusionsbarriere (14) die als Anode betriebene zweite Elektrode (13) des amperometrischen Sensors (10) angeordnet ist und zum Sauerstoffpumpen die äußere Pumpelektrode (30) und die Referenzelektrode (33) und zur Gasdruckmessung die äußere Pumpelektrode (30) und die zweite Elektrode (13) des amperometrischen Sensors (10) herangezogen sind.

15. Messfühler zur Bestimmung der Sauerstoffkonzentration im Abgas einer Brennkraftmaschine, insbesondere Breitband-Lambdasonde, mit einer Nernstzelle (25), bestehend aus einem Festelektrolyten (11) und zwei darauf angeordneten Elektroden (33, 34), von denen eine Mess- oder Nernstelektrode (34) in einem im Festelektrolyten (11) ausgebildeten Messraum (26) angeordnet und eine Referenzelektrode (33) in einem im Festelektrolyten (11) ausgebildeten Referenzgaskanal (32) einer gepumpten Sauerstoffreferenz ausgesetzt ist, und mit einer Pumpzelle (24), bestehend aus einem Festelektrolyten (11) und zwei auf diesem angeordneten Pumpelektroden (30, 31), von denen eine äußere Pumpelektrode (30) dem Abgas ausgesetzt und eine innere Pumpelektrode (31) im Messraum (26) angeordnet ist, **gekennzeichnet durch** eine integrierte Vorrichtung zur Messung des Drucks im Abgas nach einem der Ansprüche 1 - 14.

16. Messfühler nach Anspruch 15, **dadurch gekennzeichnet, dass** der Referenzgaskanal (32) eine vom Abgas beaufschlagte Öffnung (37) aufweist, dass zwischen Referenzelektrode (33) und Öffnung (37) eine Diffusionsstrecke (19) und ein der Diffusionsstrecke (19) zur Referenzelektrode (33) hin vorgelagertes Sauerstoff-Speichervolumen (18) vorhanden sind, dass auf der von der Diffusionsstrecke (19) abgekehrten Seite der Referenzelektrode (33) eine durch eine Diffusionsbarriere (14) getrennte Zusatzelektrode (13) angeordnet ist und dass zur Gasdruckmessung die Referenzelektrode (33) so betrieben wird, dass in der Kammer (18) ein konstanter Molenbruch des Sauerstoffs von 100% vorhanden ist und der über die äußere Pumpelektrode (30) und die Zusatzelektrode (13) fließende Grenzstrom als Maß für den Abgasdruck erfasst wird.

17. Messfühler nach Anspruch 15, **dadurch gekennzeichnet, dass** der Referenzgaskanal (32) eine vom Abgas beaufschlagte Öffnung (37) aufweist, dass zwischen Referenzelektrode (33) und Öffnung (37) eine Diffusionsstrecke (19) und ein dieser zur Referenzelektrode (33) hin vorgelagertes Sauerstoff-Speichervolumen (18) ausgebildet sind, das durch eine Diffusionsbarriere (14) von der Referenzelektrode (33) getrennt ist, und dass in Intervallen an die äußere Pumpelektrode (30) und die Referenzelektrode (33) eine solche Spannung gelegt wird, dass im Sauerstoff-Speichervolumen (18) ein konstanter Molenbruch des Sauerstoffs von 100% vorhanden ist und nach Umschalten der Spannung der über die äußere Pumpelektrode (30) und Referenzelektrode (33) fließende Grenzstrom als Maß für den Abgasdruck erfasst wird.

18. Messfühler nach Anspruch 15, **dadurch gekennzeichnet, dass** in einem im Messraum (26) mündenden Verbindungskanal (39) zum Abgas eine Diffusionsstrecke (19) und ein dieser zum Messraum (26) hin vorgelagertes Sauerstoff-Speichervolumen (18) ausgebildet sind, dass das Sauerstoff-Speichervolumen (18) durch die Diffusionsbarriere (14) von dem Messraum (26) getrennt ist und dass in Intervallen die Pumpzelle (24) so betrieben wird, dass im Sauerstoff-Speichervolumen (18) ein konstanter Molenbruch des Sauerstoffs von 100% vorhanden ist und nach Umschalten der Stromrichtung in der Pumpzelle (24) der über die Pumpelektroden (30, 31) fließende Grenzstrom als Maß für den Abgasdruck erfasst wird

19. Messfühler nach einem der Ansprüche 16 -18, **dadurch gekennzeichnet, dass** die Diffusionsbarriere (14) eine für Knudsen-Diffusion erforderliche Porosität aufweist und die Diffusionsstrecke (19) einen möglichst kleine Druckgradienten besitzt.

20. Messfühler nach einem der Ansprüche 16 -19, **dadurch gekennzeichnet, dass** das Sauerstoff-Speichervolumen (18) von einer Kammer (40) und die Diffusionsstrecke (19) von mindestens einer weiteren Diffusionsbarriere (41) aus keramischem Material gebildet ist.

**Claims**

1. Device for measuring the pressure in a mixture of gases, having an amperometric sensor (10) which operates according to the limit current principle and has two electrodes (12, 13) which are applied to a solid electrolyte (11) and have a DC voltage applied to them, one electrode (13) of which is screened by a diffusion barrier (14), and having a measuring element (17) for measuring the limit current flowing via the electrodes (12, 13) as a measure of the gas pressure, **characterized in that** provision is made of means which fix the mole fraction of a gas component used to measure the pressure to a constant 100% upstream of the diffusion barrier (14) at least during the measuring phase.

2. Device according to Claim 1, **characterized in that** the means have a storage volume (18) for the gas component, said storage volume being upstream of the diffusion barrier (14) in the solid electrolyte (11), a diffusion path (19) which terminates the storage volume (18) towards the mixture of gases, and two electrodes which are arranged on the solid electrolyte (11) and are intended to pump the gas component through the solid electrolyte (11) into the storage volume (18).

3. Device according to Claim 2, **characterized in that** the diffusion path (19) is designed in such a manner that it has a small pressure gradient.

4. Device according to Claim 2 or 3, **characterized in that** the storage volume (18) is formed from a chamber (40) which adjoins the diffusion barrier (14), and the diffusion path (19) is formed from a second diffusion barrier (41) which closes the chamber (40) and is made of a ceramic material, preferably aluminium oxide ($Al_2O_3$).

5. Device according to Claim 2 or 3, **characterized in that** the storage volume (18) is formed from a chamber (40) which adjoins the diffusion barrier (14), and the diffusion path (19) is formed from at least one elongate channel (43).

6. Device according to Claim 2 or 3, **characterized in that** the storage volume (18) and the diffusion path (19) are formed from a porous filler piece (44) which is made of a ceramic material, preferably aluminium oxide ($Al_2O_3$), and adjoins the diffusion barrier (14).

7. Device according to one of Claims 1-6, **characterized in that** the diffusion barrier (14) has a porosity required for Knudsen diffusion.

8. Device according to one of Claims 2-7, **characterized in that** the electrodes for pumping the gas component are additional electrodes (20, 21), of which an additional electrode (21) which is operated as an anode is arranged inside the storage volume (18) and an additional electrode (20) which is operated as a cathode is exposed to the mixture of gases, and **in that** a DC voltage is applied to the additional electrodes (20, 21).

9. Device according to one of Claims 2-7, **characterized in that** the electrodes for pumping the gas component are formed from the electrodes (12, 13) of the amperometric sensor (10), the polarity of the electrode voltage of which can be reversed for an interval of time before the pressure measuring phase in such a manner that the electrode (13) screened by the diffusion barrier (14) is operated as an anode.

10. Device according to one of Claims 1-9, **characterized in that** the mixture of gases is the exhaust gas of an internal combustion engine and the gas component is oxygen.

11. Device according to Claim 10, **characterized by** the use in a measuring sensor for determining the oxygen concentration in the exhaust gas of an internal combustion engine by using electrodes of the measuring sensor as electrodes of the amperometric sensor (10) and using said electrodes to pump the gas component.

12. Device according to Claims 9 and 11, **characterized in that** the measuring sensor has a Nernst cell (25) comprising a solid electrolyte (11) and two electrodes (34, 33) arranged on the latter, a Nernst or measuring electrode (34) of which is arranged in a measuring space (26) formed in the solid electrolyte (11) and a reference electrode (33) of which is exposed to a pumped oxygen reference in a reference gas channel (32) formed in the solid electrolyte (11), and a pumping cell (24) comprising a solid electrolyte (11) and two pump electrodes (30, 31) arranged on the latter, an outer pump electrode (30) of which is exposed to the exhaust gas and an inner pump electrode (31) of which is arranged in the measuring space (26), and **in that** the diffusion path (19) with the storage volume (18) upstream towards the measuring space (26) is formed in a connecting channel (39) to the exhaust gas, said connecting channel opening into the measuring space (26), the diffusion barrier (14) is arranged between the measuring space (26) and the storage volume (18), and the pump electrodes (30, 31) are used at intervals to pump oxygen and to measure the gas pressure.

13. Device according to Claims 9 and 11, **characterized in that** the measuring sensor has a Nernst cell (25) comprising a solid electrolyte (11) and two electrodes (33, 34) arranged on the latter, a Nernst or measuring electrode (34) of which is arranged in a measuring space (26) formed in the solid electrolyte (11) and a reference electrode (33) of which is exposed to a pumped oxygen reference in a reference gas channel (32) formed in the solid electrolyte (11), and a pumping cell (24) comprising a solid electrolyte (11) and two pump electrodes (30, 31) arranged on the latter, an outer pump electrode (30) of which is exposed to the exhaust gas and an inner pump electrode (31) of which is arranged in the measuring space (26), and **in that** the reference gas channel (32) is provided with an opening (37) which is exposed to the exhaust gas, the diffusion path (19) and the storage volume (18) upstream of the latter are formed in the reference gas channel between the reference electrode (33) and the opening (37), the diffusion barrier (14) is arranged between the storage volume (18) and the reference electrode (33), and the outer pump electrode (30) and the reference electrode (33) are used at intervals to pump oxygen and to measure the gas pressure by changing over their voltage potentials.

14. Device according to Claims 8 and 11, **characterized in that** the measuring sensor has a Nernst cell (25) comprising a solid electrolyte (11) and two electrodes (34, 33) arranged on the latter, a Nernst or measuring electrode (34) of which is arranged in a measuring space (26) formed in the solid electrolyte (11) and a reference electrode (33) of which is exposed to a pumped oxygen reference in a reference gas channel (32) formed in the solid electrolyte (11), and a pumping cell (24) comprising a solid electrolyte (11) and two pump electrodes (30, 31) arranged on the latter, an outer pump electrode (30) of which is exposed to the exhaust gas and an inner pump electrode (31) of which is arranged in the measuring space (26), and **in that** the reference gas channel (32) is provided with an opening (37) which is exposed to the exhaust gas, the diffusion path (19) and the storage volume (18) upstream of the latter are formed in the reference gas channel (32) between the reference electrode (33) and the opening (37), the diffusion barrier (14) is arranged on that side of the reference electrode (33) which faces away from the diffusion path (19) and the second electrode (13) of the amperometric sensor (10) which is operated as an anode is arranged on that side of the diffusion barrier (14) which faces away from the reference electrode (33) in the reference gas channel (32), and the outer pump electrode (30) and the reference electrode (33) are used to pump oxygen and the outer pump electrode (30) and the second electrode (13) of the amperometric sensor (10) are used to measure the gas pressure.

15. Measuring sensor for determining the oxygen concentration in the exhaust gas of an internal combustion engine, in particular a broadband lambda probe, having a Nernst cell (25) comprising a solid electrolyte (11) and two electrodes (33, 34) arranged on the latter, a measuring or Nernst electrode (34) of which is arranged in a measuring space (26) formed in the solid electrolyte (11) and a reference electrode (33) of which is exposed to a pumped oxygen reference in a reference gas channel (32) formed in the solid electrolyte (11), and having a pumping cell (24) comprising a solid electrolyte (11) and two pump electrodes (30, 31) arranged on the latter, an outer pump electrode (30) of which is exposed to the exhaust gas and an inner pump electrode (31) of which is arranged in the measuring space (26), **characterized by** an integrated device for measuring the pressure in the exhaust gas according to one of Claims 1-14.

16. Measuring sensor according to Claim 15, **characterized in that** the reference gas channel (32) has an opening (37) to which the exhaust gas is applied, **in that** a diffusion path (19) and an oxygen storage volume (18) upstream of the diffusion path (19) towards the reference electrode (33) are provided between the reference electrode (33) and the opening (37), **in that** an additional electrode (13) which is separated by a diffusion barrier (14) is arranged on that side of the reference electrode (33) which faces away from the diffusion path (19), and **in that**, in order to measure the gas pressure, the reference electrode (33) is operated in such a manner that a constant oxygen mole fraction of 100% is present in the chamber (18) and the limit current flowing via the outer pump electrode (30) and the additional electrode (13) is recorded as a measure of the exhaust gas pressure.

17. Measuring sensor according to Claim 15,
    **characterized in that** the reference gas channel (32) has an opening (37) to which the exhaust gas is applied, **in that** a diffusion path (19) and an oxygen storage volume (18), which is upstream of the latter towards the reference electrode (33) and is separated from the reference electrode (33) by a diffusion barrier (14), are formed between the reference electrode (33) and the opening (37), and **in that**, at intervals, such a voltage is applied to the outer pump electrode (30) and the reference electrode (33) that a constant oxygen mole fraction of 100% is present in the oxygen storage volume (18) and, after the voltage has been changed over, the limit current flowing via the outer pump electrode (30) and the reference electrode (33) is recorded as a measure of the exhaust gas pressure.

18. Measuring sensor according to Claim 15, **characterized in that** a diffusion path (19) and an oxygen storage volume (18) upstream of the latter towards the measuring space (26) are formed in a connecting channel (39) to the exhaust gas, said connecting channel opening into the measuring space (26), **in that** the oxygen storage volume (18) is separated from the measuring space (26) by the diffusion barrier (14), and **in that**, at intervals, the pumping cell (24) is operated in such a manner that a constant oxygen mole fraction of 100% is present in the oxygen storage volume (18) and, after the current direction has been changed over in the pumping cell (24), the limit current flowing via the pump electrodes (30, 31) is recorded as a measure of the exhaust gas pressure.

19. Measuring sensor according to one of Claims 16-18, **characterized in that** the diffusion barrier (14) has a porosity required for Knudsen diffusion, and the diffusion path (19) has a pressure gradient which is as small as possible.

20. Measuring sensor according to one of Claims 16-19, **characterized in that** the oxygen storage volume (18) is formed from a chamber (40), and the diffusion path (19) is formed from at least one further diffusion barrier (41) made of a ceramic material.

**Revendications**

1. Dispositif de mesure de la pression d'un mélange gazeux, qui présente :

   un détecteur ampérométrique (10) qui travaille selon le principe du courant limite et qui est doté de deux électrodes (12, 13) appliquées sur un électrolyte solide (11) et sur lesquelles est appliquée une tension continue, l'électrode (13) étant protégée par une barrière à la diffusion (14), et
   un élément de mesure (17) qui mesure le courant limite qui traverse les électrodes (12, 13) comme mesure de la pression de gaz,

   **caractérisé en ce que**
   le dispositif présente des moyens qui, au moins pendant la phase de mesure, fixent de manière constante à 100 % la fraction molaire du composant gazeux concerné par la mesure de pression en amont de la barrière à la diffusion (14).

2. Dispositif selon la revendication 1, **caractérisé en ce que**
   en amont de la barrière à la diffusion (14), les moyens présentent dans l'électrolyte solide (11) un volume (18) de réserve de composant gazeux,
   **en ce qu'**un parcours de diffusion (19) sépare du mélange gazeux le volume de réserve (18) et
   **en ce que** deux électrodes disposées sur l'électrolyte solide (11) pompent le composant gazeux dans le volume de réserve (18) à travers l'électrolyte solide (11).

3. Dispositif selon la revendication 2, **caractérisé en ce que**
   le parcours de diffusion (19) est formé de manière à présenter un petit gradient de pression.

4. Dispositif selon les revendications 2 ou 3, **caractérisé en ce que**
   le volume de réserve (18) est formé par une chambre (40) adjacente à la barrière à la diffusion (14) et
   **en ce que** le parcours de diffusion (19) est formé d'une deuxième barrière à la diffusion (41) en matériau céramique, de préférence en oxyde d'aluminium ($Al_2O_3$), qui ferme la chambre (40).

5. Dispositif selon les revendications 2 ou 3, **caractérisé en ce que**
   le volume de réserve (18) est formé par une chambre (40) adjacente à la barrière à la diffusion (14) et
   **en ce que** le parcours de diffusion (19) est formé par au moins un canal allongé (43).

6. Dispositif selon les revendications 2 ou 3, **caractérisé en ce que** le volume de réserve (18) et le parcours de diffusion (19) sont formés par une pièce poreuse de garniture (44) en matériau céramique, de préférence en oxyde d'aluminium ($Al_2O_3$), adjacente à la barrière à la diffusion (14).

7. Dispositif selon l'une des revendications 1 à 6, **caractérisé en ce que**
   la barrière à la diffusion (14) présente la porosité nécessaire pour une diffusion de Knudsen.

8. Dispositif selon l'une des revendications 2 à 7, **caractérisé en ce que**
   les électrodes de pompage du composant gazeux sont des électrodes supplémentaires (20, 21), **en ce que** l'électrode supplémentaire (21) utilisée comme anode est disposée à l'intérieur du volume de réserve (18),
   **en ce que** l'électrode supplémentaire (20) utilisée comme cathode est exposée au mélange de gaz et
   **en ce qu'**une tension continue est appliquée sur les électrodes supplémentaires (20, 21).

9. Dispositif selon l'une des revendications 2 à 7, **caractérisé en ce que**
   les électrodes de pompage du composant gazeux sont formées par les électrodes (12, 13) du détecteur ampérométrique (10), dont la tension peut être inversée pendant un intervalle de temps avant la phase de mesure de pression de telle sorte que l'électrode (13) protégée par la barrière à la diffusion (14) puisse fonctionner comme anode.

10. Dispositif selon l'une des revendications 1 à 9, **caractérisé en ce que**
    le mélange de gaz est constitué des gaz d'échappement d'un moteur à combustion interne et le composant gazeux est l'oxygène.

11. Dispositif selon la revendication 10, **caractérisé en ce qu'**
    il est utilisé dans une sonde de mesure qui détermine la concentration en oxygène dans les gaz d'échappement d'un moteur à combustion interne en utilisant les électrodes de la sonde de mesure comme électrodes du détecteur ampérométrique (10) et pour pomper le composant gazeux.

**12.** Dispositif selon les revendications 9 et 11, **caractérisé en ce que** la sonde de mesure présente :

une cellule de Nernst (25) constituée d'un électrolyte solide (11) et de deux électrodes (34, 33) disposées sur ce dernier, l'électrode de Nernst ou de mesure (34) étant disposée dans un espace de mesure (26) formé dans l'électrolyte solide (11) et l'électrode de référence (33) étant exposée à une référence pompée d'oxygène dans un canal (32) de gaz de référence formé dans l'électrolyte solide (11),
une cellule de pompage (24) constituée d'un électrolyte solide (11) et de deux électrodes de pompage (30, 31) disposées sur ce dernier, l'électrode extérieure de pompage (30) étant exposée aux gaz d'échappement et l'électrode intérieure de pompage (31) étant disposée dans l'espace de mesure (26),
**en ce que** le parcours de diffusion (19) est formé avec le volume de réserve (18) en amont de l'espace de mesure (26) dans un canal (39) qui assure la liaison avec les gaz d'échappement et qui débouche dans l'espace de mesure (26),
**en ce que** la barrière à la diffusion (14) est disposée entre l'espace de mesure (26) et le volume de réserve (18) et
**en ce que** les électrodes de pompage (30, 31) sont utilisées à intervalles pour le pompage de l'oxygène et pour la mesure de la pression de gaz.

**13.** Dispositif selon les revendications 9 et 11, **caractérisé en ce que** la sonde de mesure présente :

une cellule de Nernst (25) constituée d'un électrolyte solide (11) et de deux électrodes (33, 34) disposées sur ce dernier, l'électrode de Nernst ou de mesure (34) étant disposée dans un espace de mesure (26) formé dans l'électrolyte solide (11) et l'électrode de référence (33) étant exposée à une référence pompée d'oxygène dans un canal (32) de gaz de référence formé dans l'électrolyte solide (11),
une cellule de pompage (24) constituée d'un électrolyte solide (11) et de deux électrodes de pompage (30, 31) disposées sur ce dernier, l'électrode extérieure de pompage (30) étant exposée aux gaz d'échappement et l'électrode intérieure de pompage (31) étant disposée dans l'espace de mesure (26),
**en ce que** le canal de gaz de référence (32) est doté d'une ouverture (37) exposée aux gaz d'échappement,
**en ce que** le parcours de diffusion (19) et le volume de réserve (18) situé en amont de ce dernier sont formés dans le canal de gaz de référence entre l'électrode de référence (33) et l'ouverture (37),
**en ce que** la barrière à la diffusion (14) est disposée entre le volume de réserve (18) et l'électrode de référence (33) et
**en ce que** par commutation de leur potentiel de tension, l'électrode extérieure de pompage (30) et l'électrode de référence (33) sont utilisées par intervalles pour le pompage de l'oxygène et pour la mesure de la pression de gaz.

**14.** Dispositif selon les revendications 8 et 11, **caractérisé en ce que** la sonde de mesure présente :

une cellule de Nernst (25) constituée d'un électrolyte solide (11) et de deux électrodes (34, 33) disposées sur ce dernier, l'électrode de Nernst ou de mesure (34) étant disposée dans un espace de mesure (26) formé dans l'électrolyte solide (11) et l'électrode de référence (33) étant exposée à une référence pompée d'oxygène dans un canal (32) de gaz de référence formé dans l'électrolyte solide (11),
une cellule de pompage (24) constituée d'un électrolyte solide (11) et de deux électrodes de pompage (30, 31) disposées sur ce dernier, l'électrode extérieure de pompage (30) étant exposée aux gaz d'échappement et l'électrode intérieure de pompage (31) étant disposée dans l'espace de mesure (26),
**en ce que** le canal de gaz de référence (32) est doté d'une ouverture (37) exposée aux gaz d'échappement,
**en ce que** le parcours de diffusion (19) et le volume de réserve (18) situé en amont de ce dernier sont formés dans le canal de gaz de référence (32) entre l'électrode de référence (33) et l'ouverture (37) et la barrière à la diffusion (14) est disposée dans le canal (32) de gaz de référence sur le côté de l'électrode de référence (33) non tourné vers le parcours de diffusion (19) et la deuxième électrode (13) du détecteur ampérométrique (10) utilisé comme anode est disposée sur le côté de la barrière à la diffusion (14) non tourné vers l'électrode de référence (33),
**en ce que** l'électrode extérieure de pompage (30) et l'électrode de référence (33) interviennent dans le pompage d'oxygène et
**en ce que** l'électrode extérieure de pompage (30) et la deuxième électrode (13) du détecteur ampérométrique (10) interviennent dans la mesure de la pression de gaz.

**15.** Sonde de mesure destinée à déterminer la concentration en oxygène des gaz d'échappement d'un moteur à combustion interne, en particulier sonde lambda à large bande dotée

d'une cellule de Nernst (25) constituée d'un électrolyte solide (11) et de deux électrodes (33, 34) disposées sur ce dernier, l'électrode de Nernst ou de mesure (34) étant disposée dans un espace de mesure (26) formé dans l'électrolyte solide (11) et l'électrode de référence (33) étant exposée à une référence pompée d'oxygène dans un canal (32) de gaz de référence formé dans l'électrolyte solide (11), et

d'une cellule de pompage (24) constituée d'un électrolyte solide (11) et de deux électrodes de pompage (30, 31) disposées sur ce dernier, l'électrode extérieure de pompage (30) étant exposée aux gaz d'échappement et l'électrode intérieure de pompage (31) étant disposée dans l'espace de mesure (26), **caractérisée par**

un dispositif intégré de mesure de la pression des gaz d'échappement selon l'une des revendications 1 à 14.

**16.** Sonde de mesure selon la revendication 15, **caractérisée en ce que**

le canal (32) de gaz de référence présente une ouverture (37) exposée aux gaz d'échappement,

**en ce qu'**un parcours de diffusion (19) est prévu entre l'électrode de référence (33) et l'ouverture (37) et un volume (18) de réserve d'oxygène est prévu en amont du parcours de diffusion (19) qui conduit à l'électrode de référence (33),

**en ce qu'**une électrode supplémentaire (13) séparée par une barrière à la diffusion (14) est disposée sur le côté de l'électrode de référence (33) non tourné vers le parcours de diffusion (19),

**en ce que** l'électrode de référence (33) est utilisée pour la mesure de la pression de gaz de telle sorte que la fraction molaire d'oxygène dans la chambre (18) soit constante à 100 % et

**en ce que** le courant limite qui traverse l'électrode de pompage (30) et l'électrode supplémentaire (13) est détecté en tant que mesure de la pression des gaz d'échappement.

**17.** Sonde de mesure selon la revendication 15, **caractérisée en ce que**

le canal (32) de gaz de référence présente une ouverture (37) exposée aux gaz d'échappement,

**en ce qu'**un parcours de diffusion (19) est formé entre l'électrode de référence (33) et l'ouverture (37) et un volume (18) de réserve d'oxygène est formé en amont de ce parcours de diffusion vers l'électrode de référence (33) et est séparé de l'électrode de référence (33) par une barrière à la diffusion (14),

**en ce qu'**à intervalles, on applique sur l'électrode extérieure de pompage (30) et sur l'électrode de référence (33) une tension telle que la fraction molaire de l'oxygène présent dans le volume (18) de réserve d'oxygène est constante à 100 % et

**en ce qu'**après commutation de la tension, le courant limite qui traverse l'électrode extérieure de pompage (30) et l'électrode de référence (33) est détecté comme mesure de la pression des gaz d'échappement.

**18.** Sonde de mesure selon la revendication 15, **caractérisée en ce que**

un parcours de diffusion (19) est formé dans un canal (39) qui assure la liaison avec les gaz d'échappement et qui débouche dans l'espace de mesure (26) et un volume (18) de réserve d'oxygène est formé en amont de ce parcours de diffusion en direction de l'espace de mesure (26),

**en ce que** le volume (18) de réserve d'oxygène est séparé de l'espace de mesure (26) par la barrière à la diffusion (14),

**en ce que** la cellule de pompage (24) est utilisée à intervalles de telle sorte qu'une fraction molaire constante d'oxygène de 100 % soit présente dans le volume (18) de réserve d'oxygène et

**en ce qu'**après commutation de la direction du courant dans la cellule de pompage (24), le courant limite qui traverse les électrodes de pompage (30, 31) est détecté comme mesure de la pression des gaz d'échappement.

**19.** Sonde de mesure selon l'une des revendications 16 à 18, **caractérisée en ce que**

la barrière à la diffusion (14) présente la porosité nécessaire pour une diffusion de Knudsen et

**en ce que** le parcours de diffusion (19) présente le plus petit gradient de pression possible.

**20.** Sonde de mesure selon l'une des revendications 16 à 19, **caractérisée en ce que**

le volume (18) de réserve d'oxygène est formé par une chambre (40) et

**en ce que** le parcours de diffusion (19) est formé par au moins une autre barrière à la diffusion (41) en matériau céramique.

Fig.1

Fig.2

Fig.3

20

10

21

18/19

12

Fig.4

11  13  15  14  44

23

16

17

15

12

10

41

11  13  14  18  40  19

Fig.5

Fig.6

Fig.7

Fig.8

**EP 1 685 373 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3122861 A1
- EP 1139096 A
- DE 199941051 A1